# EUROPÄISCHE PATENTSCHRIFT

(11) **EP 0 551 159 B1**
(45) Veröffentlichungstag und Bekanntmachung des Hinweises auf die Patenterteilung: **23.10.1996**
(21) Anmeldenummer: 93200036.7
(22) Anmeldetag: 07.01.1993
(51) Int. Cl.: B62D 53/06, B62D 33/08, B60J 7/06

(54) **Verlängerbares Transportfahrzeug mit Abdeckmitteln**
Extensible transport vehicle with covering means
Véhicule de transport extensible avec couverture du chargement

(30) Priorität: 07.01.1992 NL 9200018
(43) Veröffentlichungstag der Anmeldung: 14.07.1993
(73) Patentinhaber: KONINKLIJKE NOOTEBOOM TRAILERS B.V., NL-6603 BV Wijchen (NL)
(72) Erfinder: van den Berg, Ruth,, NL-3911 XJ Rhenen (NL)
(74) Vertreter: Hoijtink, Reinoud

(56) Entgegenhaltungen:
- EP-A- 0 094 701
- EP-A- 0 362 047
- FR-A- 2 598 984
- GB-A- 2 212 120
- US-A- 3 239 274

## Beschreibung

Die Erfindung betrifft ein Transportfahrzeug, das ein in seiner Längsrichtung verstellbares, der Länge der zu befördernden Ladung anzupassen längliches Fahrgestell mit einer vom Fahrgestell getragenen, in etwa waagerecht verlaufenden, in der Querrichtung teilbaren Lagerungsfläche für die Aufnahme der zu befördernden Ladung und einen auf dem Fahrgestell angeordneten Aufbau mit senkrechten Stützen sowie wenigstens eine das Fahrgestell tragende Radachse umfaßt.

Solche Transportfahrzeuge sind bekannt und werden vom Anmelder unter den Namen "Teletrailer" vermarktet. Sie werden im allgemeinen für die Beförderung langer selbsttragender Gegenstände verwendet, die nur an einer beschränkten Anzahl von Stellen unterstützt zu werden brauchen. Beispiele solcher Gegenstände sind Rohre, Rammpfähle, vorgefertigte Konstruktionsteile und dergleichen. Da die Länge eines solchen Transportfahrzeugs in einem gewissen Rahmen variiert und der Länge der zu befördernden Ladung angepaßt werden kann, ist dieses Transportfahrzeug für viele unterschiedliche Arten von Ladungen einsatzfähig. Außerdem ist das Transportfahrzeug gut manövrierbar, da es jeweils nur soweit verlängert wird, daß die zu befördernde Ladung gut unterstützt wird.

Ein Problem, das sich bei verlangerbaren Transportfahrzeugen einstellt, ist daß die Ladung während des Transports offenliegt und dadurch den Umgebungseinflüssen ausgesetzt ist. Bei einer großen Anzahl von Ladungsarten tritt dadurch inakzeptabler Qualitätsverlust ein. Es ist beispielsweise an sandgestrahlte Konstruktionselemente zu denken, die nach dem Transport mit einem solchen offenen transportfahrzeug oft Korrosionsspuren aufweisen.

Bislang ist dieses Problem gelöst, indem empfindliche Ladung auf dem Transportfahrzeug in eine Schutzschicht gepackt wird, beispielsweise in eine Decke. Das Anbringen einer solchen Verpackung ist jedoch arbeits- und zeitaufwendig, während außerdem nicht immer ein geeignetes Verpackungsmaterial vorhanden ist.

Die vorliegende Erfindung bezweckt deshalb die Verschaffung eines Transportfahrzeugs der eingangs beschriebenen Art, bei dem sich diese Probleme nicht ergeben. Dies wird nach der Erfindung mit an dem Fahrgestell befestigten, in dessen Längsrichtung verlängerbaren Mitteln zum Umfassen des von dem Aufbau begrenzten Raums erreicht. Indem ein vollständig abschließbares verlängerbares Transportfahrzeug verwendet wird, braucht empfindliche Ladung nicht länger für den Transport verpackt zu werden, wodurch eine größere Einsparung von Zeit und Geld ermöglicht wird.

Vorzugsweise werden die Umfassungsmittel von einem verlängerbaren Boden und einer auf dem Aufbau mit senkrechten Stützen angebrachten verlängerbaren Überdachung gebildet. Wenn das Fahrgestell von zwei teleskopisch zueinander verschiebbaren Teilen gebildet wird, kann der Aufau mit senkrechten Stützen aus teleskopisch zusammenschiebbaren Teilen bestehen und kann die Überdachung von einer über den Aufbau mit senkrechten Stützen gespannten Plane gebildet werden. Eine solche Plane kann durch Zusammen- oder Ausrollen oder -falten einfach der sich ändernden Länge des Transportfahrzeugs angepaßt werden.

Einde solide und stabile Überdachung wird erhalten, wenn der Aufbau mit senkrechten Stützen wenigstens zwei parallele, in der Längsrichtung auf dem Transportfahrzeug angebrachte Portale umfaßt, deren jeweils eines Bein auf einem Teil des Fahrgestelles und deren jeweils anderes Bein auf dem anderen Teil des Fahrgestells angebracht ist.

Vorzugsweise umfaßt das erfindungsgemäße Transportfahrzeug eine Reihe verschiebbar auf beiden Portalen gelagerter, sich in der Querrichtung des Transportfahrzeugs erstreckender Träger, die in regelmäßigem gegenseitigem Abstand mit der Plane verbunden sind. Dadurch kann die Plane nach Bedarf geöffnet werden. Beispielsweise beim Beladen des Transportfahrzeugs, und danach wieder abgeschlossen werden. Eine konstruktionstechnisch einfache, robuste Ausführung wird erhalten, wenn der die Beine verbindende Teil jedes Portals von einer Reihe untereinander teleskopisch verschiebbarer C-Profile gebildet wird und jeder Träger nahe jedem seiner Enden mit einem in die C-Profile eingreifenden, verschiebbaren Führungselement verbunden ist. Vorzugsweise hat dabei jedes Führungselement die Gestalt eines in der Längsnut der C-Profile verfahrbaren Wagens, und ist über Scherenarme mit Zwei an beiden Seiten des Führungselements befindlichen Trägern verbunden.

Der Boden kann von einer Reihe in der Längsrichtung zueinander verschiebbarer Teile gebildet werden. Wenn auf jedem Teil der Lagerungsfläche ein Bodenteil befestigt ist und einer der Bodenteile einen sich über den anderen Bodenteil hinausstreckenden Überhang aufweist, dessen Länge derart ist, daß in ausgeschobenem Zustand des Transportfahrzeugs der Überhang sich noch gerade über dem anderen Bodenteil befindet, wird mit einer minimalen Anzahl von Teilen ein optimaler Schutz der Ladung vor beispielsweise aufspritzendem Wasser realisiert.

Die Erfindung wird nunmehr anhand eines Beispiels beschrieben, wobei auf die beigefügte Zeichnung verwiesen wird, in der:
Figur 1 eine teilweise weggebrochene, perspektivische Ansicht einer Zugmaschine mit einem verlängerbaren Transportfahrzeug nach der Erfindung ist, mit geschlossener Überdachung in vollständig zusammengeschobenem und vollständig ausgeschobenem Zustand;
Figur 2 eine mit der Figur 1 übereinstimmende Ansicht ist, in der das Transportfahrzeug in vollständig ausgeschobenem Zustand und mit geöffneter Plane dargestellt ist;
Figur 3 eine teilweise weggebrochene perspektivische Ansicht des Aufbaus des Transportfahrzeugs nach der Erfindung ist;
Figur 4 eine perspektivische Detailansicht nach dem Pfeil IV in Figur 3 ist, und
Figur 5 eine teilweise weggebrochene perspektivische Detailansicht nach dem Pfeil V in Figur 3 ist.

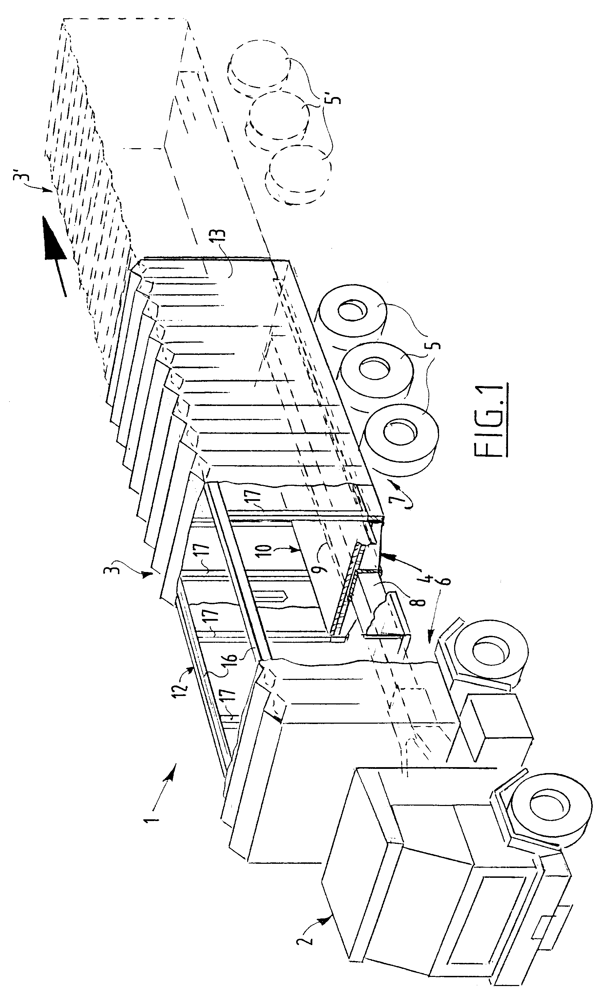

Ein Schwerlastzug 1 (Figur 1) umfaßt eine Zugmaschine 2 und ein verlängerbares Transportfahrzeug in Form eines Aufliegers 3. Der Auflieger 3 ist mit einem Fahrgestell 4 und drei Radachsen 5 versehen, die zusammen die Hechseite des Fahrgestells 4 tragen. Die Frontseite des Fahrgestells 4 wird von der Zugmaschine 2 gestützt. Das Fahrgestell 4 wird von einem Frontteil 6 und einem Heckteil 7 gebildet, von welchen jedes Teil einen Längsträger 8 beziehungsweise 9 aufweist, welche Längsträger 8, 9 teleskopisch ineinander verschoben werden können.

Zum Schutz der auf dem Auflieger zu befördernden Ladung sind mit dem Fahrgestell 4 verbundene, verlängerbare Umfassungsmittel anwesend. Diese Umfassungsmittel bestehen aus einem verlängerbaren Boden 10 und einer daran anschließenden, verlängerbaren Überdachung

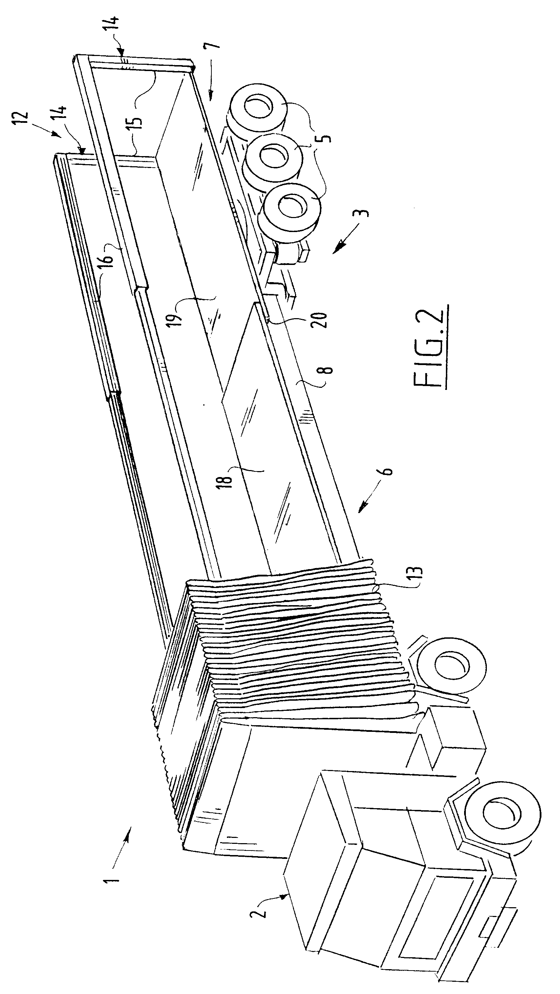

Der Aufbau 12 besteht aus zwei parallelen Portalen 14 (Fig. 2), die jeweils mit zwei Beinen 15 (davon nur ein Bein gezeigt) versehen sind, von denen ein Bein auf dem Frontteil 6 und das andere Bein auf dem Heckteil 7 angebracht ist, und einen die Beine 15 verbindenden teleskopischen Teil 16. Der teleskopische Verbindungsteil 16 kann, sofern erwünscht, von in regelmäßigem Abstand auf dem frontteil 6 beziehungsweise dem Heckteil 7 angebrachten, wegnehmbaren Stützen 17 gestützt werden.

Der Boden 10 besteht aus zwei in der Längsrichtung zueinander verschiebbaren Teilen 18 beziehungsweise 19, wobei der vordere Bodenteil 18 auf dem Frontteil 6 und der hintere Bodenteil 19 auf dem Heckteil 7 des Fahrgestells 4 befestigt ist. Der vordere Bodenteil 18 weist einen Überhang auf, der sich bei eingeschobenem Zustand des Aufliegers 3 über den hinteren Bodenteil 19 hinauserstreckt, und der so lang ist, daß er sich in vollständig ausgeschobenem Zustand des Aufliegers 3 noch gerade über dem vorderen Rand des hinteren Bodenteils 19 befindet. So wird auf dem Auflieger 3 zu befördernde Ladung unter allen Umständen an der Unterseite vor Außeneinflüssen, wie beispielsweise aufspritzendem Wasser und dergleichen, abgeschützt.

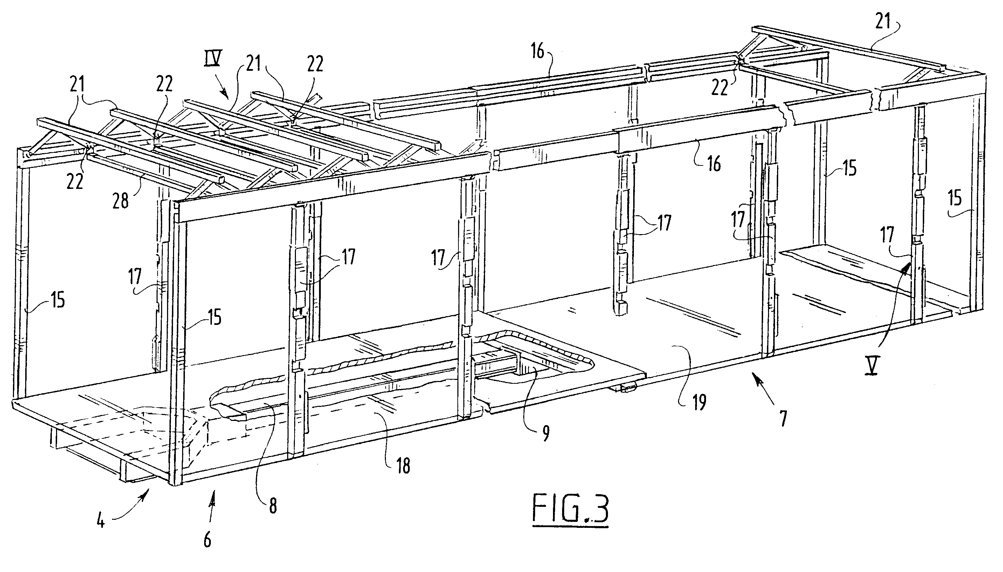

Um die Plane 13 öffnen zu können, beispielsweise beim Beladen des Aufliegers 3, ist diese auf Trägern 21 (Figur 3) angebracht, die in Längsrichtung verschiebbar auf den Portalen 14 gelagert sind. Dazu sind die teleskopischen Verbindungsteile 16 der Portale 14 als C-förmige Profile ausgeführt, in die eine Reihe mit den Trägern 21 verbundener Führungselemente 22 verschiebbar aufgenommen ist.

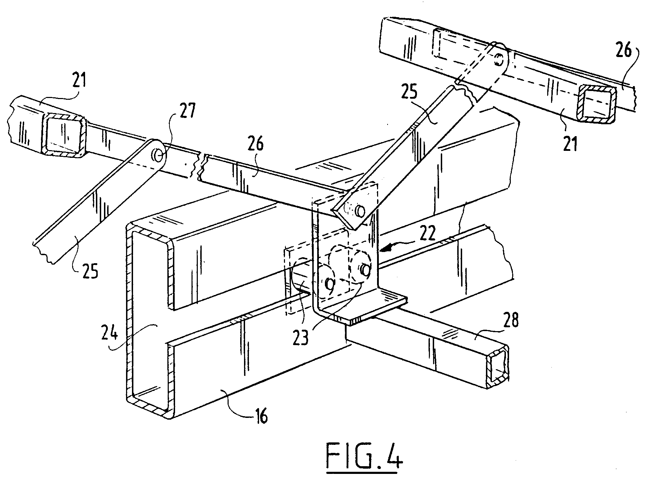

Jedes Führungselement 22 hat die Gestalt eines Wagens, der mit zwei Führungsrollen 23 (Figur 4) versehen ist, die verfahrbar in die Längsnut 24 des C-Profils aufgenommen sind. Jeder Führungswagen 22 ist über zwei Scherenarme 25, 26 mit auf beiden Seiten des Wagens befindlichen Trägern 21 verbunden. Die Scherenarme 25 und 26 sind miteinander noch mittels eines Scharniers 27 verbunden, wodurch in geschlossenem zustand die Plane 13 gerade über dem Aufbau 12 gelegen ist, so daß der Auflieger 3 einen relativ geringen Luftwiderstand hat. Weil jeder Führungswagen 22 mit zwei Führungsrollen 23 ausgestattet ist, wird eine stabile Bewegung des Wagens in dem C-Profil erhalten. Um zu vermeiden, daß sich die Wagen verschränken, ist jedes Führungselement 22 über eine Querstange 28 mit einem in dem gegenüberliegenden Portal 14 gelagerten Führungselement 22 verbunden.

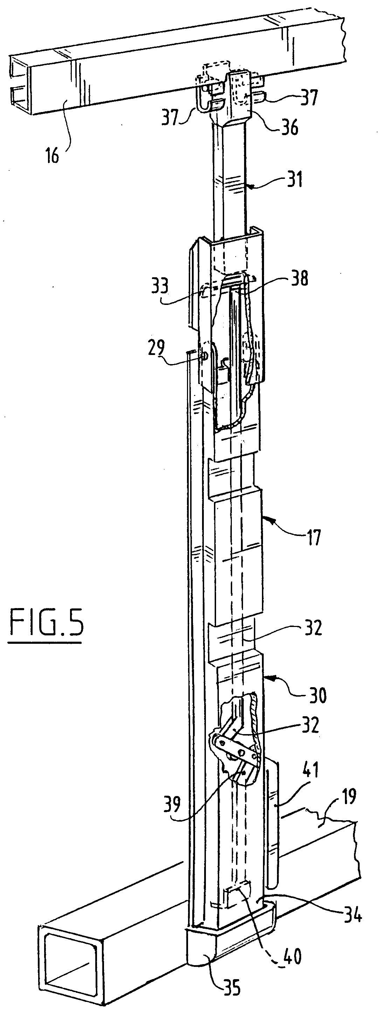

Jede wegnehmbare Stütze 17 besteht aus zwei über ein Scharnier 29 verbundenen Teilen 30 beziehungsweise 31, die mittels einer ersten bewegbaren Riegelstange 32 und einer damit zusammenwirkenden Klemmvorrichtung 33 einander gegenüber fixiert werden können (Figur 5). In dem Teil 30 ist noch eine zweite Verriegelungsstange 39 angebracht, die mit einer auf dem Gestell angebrachten Klemmvorrichtung 40 zusammenwirkt. Die beiden Riegelstangen 32, 39 werden mit einem gemeinsamen Hebel 41 betätigt. Bei der Montage der Stütze 17 wird der die Riegelstangen 32, 39 tragende Teil 30 mit seinem freien Ende 34 in ein Loch eingesetzt, wonach der die Klemmvorrichtung 33 tragende Teil 31 mit seinem freien Ende 36 in an dem teleskopischen Verbindungsteil 16 des Portals 14 angebrachte Ösen 37 eingesteckt wird, und danach durch Umlegen des Hebels 41 die Riegelstangen 32, 39 in deren Riegelposition geschoben werden, in welcher Position ihre Enden 38 beziehungsweise 42 in die Klemmvorrichtungen 33 beziehungsweise 40 fallen. Auf diese Weise können die Stützen 17 schnell und einfach aufgestellt und wieder weggenommen werden.

## Patentansprüche

1. Transportfahrzeug (3), das ein in seiner Längsrichtung verstellbares, der Länge der zu befördernden Ladung anzupassen längliches Fahrgestell (4) mit einer vom Fahrgestell (4) getragenen, in etwa waagerecht verlaufenden, in der Querrichtung teilbaren Lagerungsfläche für die Aufnahme der zu befördernden Ladung und einen auf dem Fahrgestell angeordneten Aufbau (12) mit senkrechten Stützen sowie wenigstens eine das Fahrgestell (4) tragende Radachse (5) umfaßt, gekennzeichnet durch an dem Fahrgestell (4) befestigte, in dessen Längsrichtung verlängbare Mittel zum Umfassen des von dem Aufbau (12) begrenzten Raums.

2. Transportfahrzeug (3) nach Anspruch 1, dadurch gekennzeichnet, daß die Umfassungsmittel von einem verlängerbaren Boden (10) und einer auf dem Aufbau (12) mit senkrechten Stützen angebrachten verlängbaren Überdachung (13) gebildet werden.

3. Transportfahrzeug (3) nach Anspruch 2, wobei das Fahrgestell (4) von zwei teleskopisch zueinander verschiebbaren Teilen (6,7) gebildet wird, dadurch gekennzeichnet, daß der Aufbau (12) mit senkrechten Stützen aus teleskopisch zusammenschiebbaren Teilen (16) besteht und die Überdachung von einer über den Aufbau (12) mit senkrechten Stützen gespannten Plane (13) gebildet wird.

4. Transportfahrzeug (3) nach Anspruch 3, dadurch gekennzeichnet, daß der Aufbau (12) met senkrechten Stützen wenigstens zwei parallele, in der Längsrichtung auf dem Transportfahrzeug (3) angebrachte Portale (14) umfaßt, deren jeweils eines Bein (15) auf einem Teil (6) des Fahrgestelles (4) und deren jeweils anderes Bein (15) auf dem anderen Teil (7) des Fahrgestells (4) angebracht ist.

5. Transportfahrzeug (3) nach Anspruch 4, gekennzeichnet durch eine Reihe verschiebbar auf beiden Portalen (14) gelagerter, sich in der Querrichtung des Transportfahrzeugs (3) erstreckender Träger (21) die in regelmäßigem gegenseitigem Abstand mit der Plane (13) verbunden sind.

6. Transportfahrzeug (3) nach Anspruch 5, dadurch gekennzeichnet, daß der die Beine (15) verbindende Teil (16) jedes Portals (14) von einer Reihe untereinander teleskopisch verschiebbarer C-Profile gebildet wird und jeder Träger (21) nahe jedem seiner Enden mit einem in die C-Profile eingreifenden, verschiebbaren Führungselement (22) verbunden ist.

7. Transportfahrzeug (3) nach Anspruch 6, dadurch gekennzeichnet, daß jedes Führungselement (22) die Gestalt eines in der Längsnut (24) der C-Profile verfahrbaren Wagens hat und über Scherenarme (25,26) mit zwei an beiden Seiten des Führungselements (22) befindlichen Trägern (21) verbunden ist.

8. Transportfahrzeug (3) nach einem der Ansprüche 2 bis 7, dadurch gekennzeichnet, daß der Boden (10) von einer Reihe in der Längsrichtung zueinander verschiebbarer Teile (18,19) gebildet wird.

9. Transportfahrzeug (3) nach Anspruch 8, dadurch gekennzeichnet, daß auf jedem Teil (6,7) der Lagerungsfläche ein Bodenteil (18,19) befestigt ist und einer (18) der Bodenteile einen sich über den anderen Bodenteil (19) hinausstreckenden Überhang aufweist, dessen Länge derart ist, daß in ausgeschobenem Zustand des Transportfahrzeugs (3) der Überhang sich noch gerade über dem anderen Bodenteil (19) befindet.

## Claims

1. Transport vehicle (3), including an elongated chassis (4) adjustable in its longitudinal direction to be adapted to the length of the load to be conveyed, with a substantially horizontal bearing surface for receiving the load to be conveyed carried by the chassis (4) and divisible in the transverse direction and a structure (12) with vertical supports arranged on the chassis and at least one wheel axle (5) carrying the chassis (4), **characterized by** means for covering the space delimited by the structure (12) secured to the chassis (4) and extensible in the longitudinal direction thereof.

2. Transport vehicle (3) according to claim 1, **characterized in that** the covering means are formed by an extensible floor (10) and an extensible roof (13) fitted to the structure (12) with vertical supports.

3. Transport vehicle (3) according to claim 2, in which the chassis (4) is formed by two telescopic parts (6, 7), **characterized in that** the structure (12) with vertical supports consists of telescopic parts (16) and the roof is formed by a tarpaulin (13) streched over the structure (12) with vertical supports.

4. Transport vehicle (3) according to claim 3, **characterized in that** the structure (12) with vertical supports includes at least two parallel portals (14) fitted to the transport vehicle (3) in the longitudinal direction, one leg (15) of which is fitted to one part (6) of the chassis (4) and the other leg (15) of which is fitted to the other part (7) of the chassis (4).

5. Transport vehicle (3) according to claim 4, **characterized by** a row of beams (21) extending in the transverse direction of the transport vehicle (3) and displaceably mounted on both portals (14), these being connected to the tarpaulin (13) at regular intervals.

6. Transport vehicle (3) according to claim 5, **characterized in that** the part (16) of each portal (14) connecting the legs (15) is formed by a row of telescopic C-shaped profiles and each beam (21) is connected close to each of its ends to a displaceable guide element (22) engaging the C-shaped profiles.

7. Transport vehicle (3) according to claim 6, **characterized in that** each guide element (22) is in the form of a carriage movable in the longitudinal groove (24) in the C-shaped profiles and is connected via scissor arms (25, 26) to two beams (21) situated on either side of the guide element (22).

8. Transport vehicle (3) according to one of claims 2 to 7, **characterized in that** the floor (10) is formed by a row of parts (18, 19) displaceable relative to one another in the longitudinal direction.

9. Transport vehicle (3) according to claim 8, **characterized in that** a floor part (18, 19) is secured to each part (6, 7) of the bearing surface and one (18) of the floor parts has an overhang projecting out beyond the other floor part (19), its length being such that the overhang is still situated directly above the other floor part (19) in the extended state of the transport vehicle (3).

## Revendications

1. Véhicule de transport (3), qui comprend un châssis allongé (4) réglable dans sa direction longitudinale pour s'adapter à la longeur de la charge à transporter, avec une surface de chargement portée par le châssis (4), s'étendant approximativemant horizontalement et divisible dans la direction transversale, pour porter la charge à transporter, et une structure (12) placée sur le châssis avec des montants verticaux, ainsi qu'au moins un essieu (5) portant le châssis (4), **caracterisé par** des moyens fixés sur le châssis (4), extensibles dans sa direction longitudinale et destinés à confiner l'espace délimité par la structure (12).

2. Véhicule de transport (3) selon la revendication 1, **caracterisé en ce que** les moyens de confinement sont formés d'und fond extensible (10) et d'une toiture extensible (13) placée sur la structure (12) à montants verticaux.

3. Véhicule de transport (3) selon la revendication 2, le châssis (4) étant formé de deux parties (6, 7) mobiles l'une par rapport à l'autre de manière télescopique, **caracterisé en ce que** la structure (12) à montants verticaux est constituée de pièces (16) pouvant s'emboîter de manière télescopic et la toiture est formée d'une bâche (13) tendue sur la structure (12) à montants verticaux.

4. Véhicule de transport (3) selon la revendication 3, **caracterisé en ce que** la structure (12) à montants verticaux comporte au moins deux portiques parallèlles (14) disposés sur le véhicule de transport (3) dans la direction longitudinale, portiques dont une jambe (15) est placée sur une partie (6) du châssis (4) et l'autre jambe (15) est placée sur l'autre partie (7) du châssis (4).

5. Véhicule de transport (3) selon la revendication 4, **caracterisé par** une serié de supports (21) montés coulissant sur les deux portiques (14) et s'étendant dans la direction transversale du véhicule de transport (3), supports qui sont reliés à la bâche (13) à des intervalles réguliers.

6. Véhicule de transport (3) selon la revendication 5, **caracterisé en ce que** la partie (16) de chaque portique (14) qui relie les jambes (15) est formée d'une serié de profilés en C mobiles de façon télescopique entre eux et chaque support (21) est relié près de chacune de ses extrémités à un élément de guidage coulissant (22) s'engageant dans les profilés en C.

7. Véhicule de transport (3) selon la revendication 6, **caracterisé en ce que** chaque élément de guidage (22) a la forme d'une chariot pouvant se déplacer dans la rainure longitudinal (24) des profilés en C, et est relié, par l'intermédiaire de bras articulés (25, 26), à deux supports situés (21) des deux côtes de l'élément de guidage (22).

8. Véhicule de transport (3) selon l'une des revendications 2 à 7, **caracterisé en ce que** le fond (10) est formé d'une série des pièces (18, 19) mobiles dans la direction longitudinale.

9. Véhicule de transport (3) selon la revendication 8, **caracterisé en ce qu**'une pièce de fond (18, 19) est fixée sur chaque partie (6, 7) de la surface de chargement et l'une (18) des pièces de fond présente un surplomb s'étendant sur l'autre de pièce de fond (19), surplomb dont la longueur est telle qu'à l'état déployé du véhicule de transport (3), le surplomb se trouve encore tout juste audessus de l'autre pièce de fond (19).
